# EUROPÄISCHE PATENTSCHRIFT

(11) **EP 2 401 062 B1**
(45) Veröffentlichungstag und Bekanntmachung des Hinweises auf die Patenterteilung: **24.10.2018**
(21) Anmeldenummer: 10705355.5
(22) Anmeldetag: 24.02.2010
(51) Int. Cl.: B01D 61/14

(54) **FILTRATIONSVERFAHREN UND -VORRICHTUNG**
FILTRATION METHOD AND DEVICE
PROCÉDÉ ET DISPOSITIF DE FILTRATION

(30) Priorität: 25.02.2009 DE 102009010484
(43) Veröffentlichungstag der Anmeldung: 04.01.2012
(73) Patentinhaber: GEA Mechanical Equipment GmbH, 59302 Oelde (DE)
(72) Erfinder: HAMATSCHEK, Jochen, 59302 Oelde (DE); OLAPINSKI, Hans, 73773 Aichwald (DE); GUERRA, Maria Alexandra, 4534 Horve (DK); NIELSEN, Torben K., 4030 Tune (DK)
(74) Vertreter: Dantz, Jan Henning
(86) Internationale Anmeldenummer: PCT/EP2010/052323
(87) Internationale Veröffentlichungsnummer: WO 2010/097401

(56) Entgegenhaltungen:
- WO-A1-02/055539
- WO-A1-03/039712
- WO-A1-2005/077208
- WO-A2-02/00331
- DE-A1-102006 038 340
- JP-A- 7 289 861
- JP-A- 2001 079 360
- US-A- 5 254 250

## Beschreibung

Die Erfindung betrifft ein Filtrationsverfahren und eine Filtrationsvorrichtung zur Filtration eines fließfähigen Mediums als eine fließfähige Fermentationsbrühe.

Es ist an sich bekannt, mittels einer Cross-Flow-Filtration ein fließfähiges Medium wie eine Fermentationsbrühe zu filtrieren, wobei man ein Retentat und ein Permeat erhält. Da es sich bei biotechnologischen Medien oftmals um empfindliche, sehr schonend zu behandelnde Produkte handeln kann, besteht der Bedarf nach einem Verfahren und einer Filtrationsvorrichtung zur Filtration von fließfähigen Medien, insbesondere von Fermentationsbrühen, mit welchen die eigentliche Filtration in ebenfalls besonders schonender Weise durchgeführt wird. Zudem muß das Verfahren bei oder unterhalb von kritischen Flußbedingungen durchgeführt werden, um eine konstante Kapazität und einen hohen Produktdurchsatz sicherzustellen.
Zum Stand der Technik werden die US 52 54 250 A, die US 71 63 622 B2, die US 2008 / 0073264 A1 und die US 6,461,503 B1 sowie die Patent Abstracts of Japan JP 05-2 20 499 A, die JP 06-2 38 134 A, die JP 07 - 2 89 861 A und die JP 09 - 3 23 030 A, sowie die DE 10 2006 038 340 A1, die JP 2001 079 360 A, die WO 2005/077 208 A1, die WO 02/00331 A2 und die WO 02/055539 A1 genannt.

Zum Stand der Technik wird die US 6,461,503 B1 genannt. Dort wird das zu filtrierende Medium mittels in einem Behältnis angeordneter, rotierender und sich bereichsweise überlappenden Filterscheiben filtriert, wobei das Permeat und das Retentat ständig aus dem Behälter abgeleitet werden. Die Abmessungen des Behältnisses entsprechen in etwa den Abmessungen der Filtrieranordnung im Behältnis. Das Behältnis ist auf die Durchflussbedingungen an den Filterscheiben abgestimmt und wird in der Regel über einen dem Behältnis vorgeschalteten Prozesstank beschickt.

Die Erfindung hat vor diesem Hintergrund die Aufgabe, ein Verfahren und eine Vorrichtung zur Filtration fließfähiger Medien als Fermentationsbrühen, zu schaffen, mit denen die Filtration mit relativ geringem apparativem Aufbau besonders Produkt schonend durchführbar ist sowie unter geringen oder bei kritischen Flußbedingungen (niedriger Transmembrandruck).

Die Erfindung löst diese Aufgabe durch den Gegenstand des Anspruchs 1. Sie schafft ferner die Filtrationsvorrichtung des Anspruchs 8 und den Gegenstand der Ansprüche 15-17.

Ein besonderer Vorteil der Erfindung ist darin zu sehen, dass die an sich separat erforderlichen Komponenten Prozesstank und Filtrationsanordnung zusammengefasst werden, indem mehrere Filtratonsanordnungen direkt in einen Prozesstank integriert werden. Der Prozesstank mit den Filtrationsanordnungen bildet im Zusammenspiel im Sinne dieser Beschreibung eine vorzugsweise pumpenfreie "Filtrationsvorrichtung", die vorteilhaft durch eine Rührvorrichtung zur Erzeugung definierter Strömungsverhältnisse im Prozesstank während der Filtration und/oder eine Einrichtung zur Erzeugung eines konstanten sowie vorzugsweise niedrigen und gleichmäßigen Transmembrandrucks an der Filtrationsanördnung im Prozesstank ergänzt wird. Mehrere der zusammen geschalteten Filtrationsvorrichtungen bilden im Kontext dieser Beschreibung eine Filtrationsanlage. Mit Transmembrandruck wird die Druckdifferenz zwischen der Unfiltratseite, der Retentatseite, und der Filtratseite, der Permeatseite, bezeichnet.

Sowohl die aufkonzentrierte Biomasse als auch das Permeat können einen ggf. weiterzuverarbeitenden Wertstoff bilden.

Die Filtrationsvorrichtung weist einen vorzugsweise rundum geschlossenen tankartigen Behälter - nachfolgend "Prozesstank" genannt auf, in den eine oder mehrere Zuleitungen münden und in dem die Filteranordnung, vorzugsweise die wenigstens eine Membranfilteranordnung angeordnet ist, wohingegen dem Abfluss ein Schließventil zugeordnet ist, so dass der Abfluss von Retentat während der Filtration gestoppt werden kann, bis das Schließventil freigegeben wird.

Die Erfindung ist hervorragend zur schonenden Filtration verschiedenster Medien, insbesondere von Fermentationsbrühen auf tierischer und pflanzlicher Basis, bevorzugt von tierischen Zellen, insbesondere von Säugetierzellen, geeignet, welche in dem vorzugsweise geschlossenen Prozesstank besonders schonend verarbeitet werden.

Der Aufbau kann entweder als eine einstufige beschickende (single batch) oder eine Fed-batch Fermentation oder als kontinuierlicher Fermentationsprozess ausgelegt werden. Da die keramischen Filterscheiben (dampf)gehärtet ausgelegt sein können (auto-claved), ist es auch möglich, die Filtrationsvorrichtung direkt im Prozess- bzw. Fermentationstank anzuordnen.

Dabei wird zunächst vorzugsweise eine Aufkonzentration durchgeführt und dann eine Diafiltration im Sinne einer Waschung unter Ersatz abgezogener Flüssigkeit durch eine andere Flüssigkeit. Sodann wird der Prozesstank geleert und zusammen mit der Filtrationsvorrichtung gereinigt.

Das Filtrationsverfahren wird erfindungsgemäß bei einem konstanten Transmembrandruck (TMP) durchgeführt.

In Hinsicht auf die Vorrichtung ist die wenigstens eine Filtrationsanordnung nach einer Variante vorzugsweise derart in dem Prozesstank angeordnet und der Tank ist derart ausgelegt und mit dem zu filtrierenden Medium befüllbar, dass durch das Medium direkt eine Flüssigkeitssäule erzeugt wird, die einen konstanten Transmembrandruck von beispielsweise mehr als 0, 2 bar, insbesondere 0, 3 bar an den MembranFilterscheiben erzeugt.

Der konstante Transmembrandruck wird durch eine Druckbeaufschlagung des Prozesstanks mit einem Fluid wie einem Gas erzeugt. Der genannte Druckbereich hat sich für die Filtration von Fermentationsbrühen als besonders vorteilhaft erwiesen. Erreichbar ist er auf einfache Weise dadurch, dass eine entsprechend hohe Flüssigkeitssäule erzeugt wird, so dass der Prozesstank vorzugsweise einige Meter hoch ist. Der Ablauf aus dem Prozesstank wird vorzugsweise verschließbar gestaltet.

Vorteilhafte Ausgestaltungen der Erfindung sind in den Unteransprüchen angegeben. Insbesondere wird es möglich, die in den Verfahrensansprüchen beschriebenen vorteilhaften Verfahrensvarianten zu realisieren.

Erfindungsgemäß sind die Hohlwellen der Filtrationsanordnungen horizontal ausgerichtet, wobei die Hohlwellen mit den Membranfilterscheiben dann vom Außenumfang des Prozesstanks in diesen hineinragen. Durch diese Anordnung sind die Filtrationsanlagen besonders gut zugänglich und leicht handhabbar und die Druckdifferenz in der Flüssigkeitssäule ist, wenn der Transmembrandruck durch eine Flüssigkeitssäule erzeugt wird, über die Höhe der Filtrationsvorrichtung hinweg relativ gering.

Es kann alternativ auch sinnvoll sein, die Hohlwellen mit den Membranfilterscheiben vertikal auszurichten und sie von der Grundseite oder der Oberseite des Prozesstanks her in den Prozesstank hinein ragen zu lassen. Diese Auslegung bietet den Vorteil, dass auf engem Raum dicht nebeneinander eine Mehrzahl der Filtrationsanordnungen im Prozesstank unterbringbar ist. Die Rühreinrichtung wird dann vorzugsweise entsprechend an der jeweils gegenüberliegenden Seite, d.h. der Oberseite oder der Grundseite angeordnet.

Vorzugsweise wird während der Filtration, insbesondere der Diafiltration des Schritts c) ein konstanter Transmembrandruck an den Filtrationsscheiben von mehr als 0,2 bar aufrecht erhalten und weiter bevorzugt wird während der Filtration, insbesondere der Diafiltration des Schritts c) ein konstanter Transmembrandruck an den Filtrationsscheiben von weniger als 5 bar, insbesondere weniger als 1 bar, aufrecht erhalten.

Konstanter Transmembrandruck meint hier den innerhalb einer für den Prozess zulässigen und technisch realisierbaren Toleranzgrenze.

Nachfolgend wird die Erfindung unter Bezug auf die Zeichnung anhand von Ausführungsbeispielen näher beschrieben. Es zeigt:
- Fig. 1: eine schematische Darstellung einer erfindungsgemäßen Filtrationsvorrichtung;
- Fig. 2: eine schematisch dargestellte Filtrationsanlage, die mehrere der Filtrationsvorrichtungen aus Fig. 1 aufweist; und
- Fig. 3 bis 8: eine schematische Darstellung aufeinander folgender Schritte eines erfindungsgemäßen Filtrationsverfahrens mit der Filtrationsanlage aus Fig. 1.

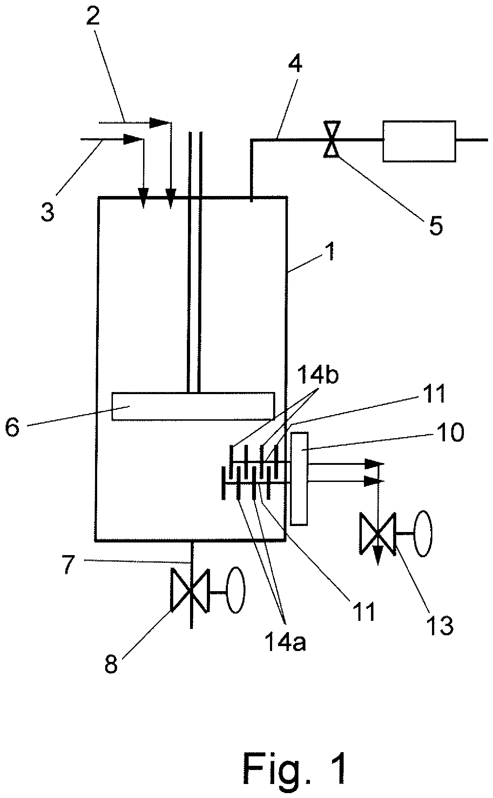

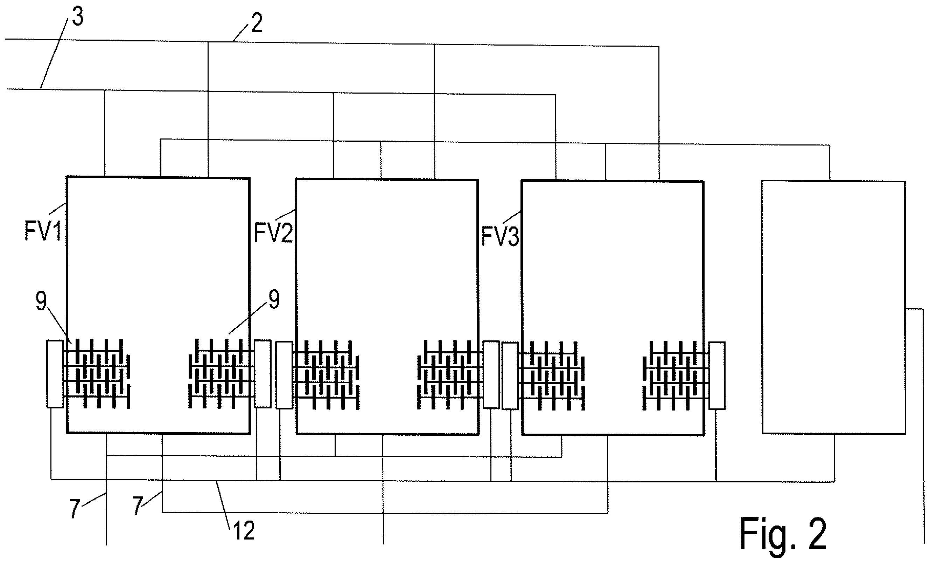

Figur 1 zeigt eine Filtrationsvorrichtung, die vorzugsweise einen Teil einer übergeordneten Filtrationsanlage darstellt, wie sie in Figur 2 abgebildet ist.

Diese Filtrationsanlage kann wiederum beispielsweise einen Abschnitt einer übrigen, hier nicht dargestellten Fabrikationsanlage zur Herstellung von biotechnischen Produkten wie beispielsweise biotechnisch hergestellten Arzneimitteln bilden.

Die Filtrationsvorrichtung weist einen rundum geschlossenen tankartigen Behälter 1 zur Aufnahme von Filtrationsanordnungen 9 und eines zu filtrierenden Mediums im Batchbetrieb auf- nachfolgend "Prozesstank 1" genannt, auf, in den eine oder mehrere Zuleitungen 2, 3 münden.
Wenigstens eine der Zuleitungen 2 dient zur Zuleitung einer Fermentationsbrühe in den Prozesstank 1.

Entweder dieselbe Zuleitung oder eine weitere Zuleitung 3 ermöglicht dagegen das Einleiten einer Reinigungsflüssigkeit zur Durchführung einer Reinigung, insbesondere einer CIP-Reinigung, in den Prozesstank 1.

Erfindungsgemäß ermöglicht eine Zuleitung 4 es, den Prozesstank 1 mit Luft oder Gas, insbesondere Inertgas, ggf. unter Druck, zu beaufschlagen, wozu in die Zuleitung ein Ventil 5 geschaltet ist.

Wie in Figur 1 weiter zu erkennen, ist der Prozesstank 1 ferner vorzugsweise mit einer Einrichtung zur Erzeugung einer Strömung im Prozesstank, beispielsweise einer Rühreinrichtung 6, versehen.

Bevorzugt an seinem unteren vertikalen Ende weist der Prozesstank 1 ferner wenigstens einen Ablauf 7 auf, mit dem er entleerbar ist. In den Ablauf 7 ist ein Ablaufventil 8 geschaltet.

In dem Prozesstank 1 ist zudem wenigstens eine Membran-Filtrationsanordnung 9 angeordnet, die wiederum wenigstens eine, zwei oder mehr drehbare Wellen 11 von mindestens einem Antrieb aufweist. Der Antrieb ist hier an einer Flanschplatte 10 angeordnet.

Die Wellen 11 sind als Hohlwellen ausgebildet, durch welche filtrierte Flüssigkeit bzw. Filtrat durch eine Ableitung 12 mit einem Ventil 13 aus dem Tank geleitet wird. Auf den Wellen 11 sind jeweils Membranfilterscheiben 14 angeordnet.

Ist nur eine Hohlwelle mit axial beabstandeten Membranfilterscheiben 14 vorgesehen, kann eine weitere stillstehende Welle vorgesehen sein, auf der stillstehende (nicht filtrierend wirkende) Scheiben angeordnet sind, welche in die Zwischenräume der Membranfilterscheiben ragen, um derart geeignete Strömungsverhältnisse zur Filtration an den Membranfilterscheiben der einen Hohlwelle zu erzeugen (nicht dargestellt).

Durch modularen Aufbau der Filtrationsanordnungen kann die erforderliche Filtrationsflächeproduktabhängig für eine optimale Fahrweise angepasst werden.

Es ist vorteilhaft, jeweils zwei der Hohlwellen gemeinsam anzutreiben. Die Flanschplatte 10 dient auch dazu, eine Öffnung in Behälter zu verschließen, durch welche die Membranfilterschieben horizontal in den Prozesstank geschoben werden. Es ist beispielsweise denkbar, umfangsverteilt zwei oder mehr Öffnungen in dem Prozesstank vorzusehen, die dazu dienen, je nach Bedarf wahlweise entsprechend viele der Filtrationsanordnungen in den Prozesstank einzuschieben (hier nicht dargestellt).

Jede der Wellen ist mit einer Mehrzahl von axial auf den Wellen 11 beabstandet angeordneten Membranfilterscheiben 14 versehen, wobei die Anordnung derart gewählt ist, dass sich die Membranfilterscheiben 14a der einen Welle 11 und die Membranfilterscheiben 14b der anderen Welle 11 radial zumindest abschnittsweise überlappen. Die Membranfilterscheiben können einen Aufbau mit einer inneren Hohlkammer, die in die Hohlwelle mündet, aufweisen, wie er aus der US 6,461,503 B1 bekannt ist. Sie können ferner aus Materialien bestehen, wie sie in der US 6,461,503 beschrieben sind. Der Begriff des "Membranfilters" ist insofern nicht zu eng zu fassen.

Die Wellen 11 sind horizontal ausgerichtet, da sie derart gut in dem Prozesstank 1 unterbringbar sind, ohne vertikal zu hoch zu bauen und da sie sich derart vorzugsweise nur über eine relativ geringe vertikale Höhe erstrecken, so dass die Druckdifferenz in der zu filtrierenden Flüssigkeit über die Höhe der Filtrationsanordnung hinweg relativ gering ist.

Nach Figur 1 ist nur eine Membran-Filtrationsanordnung 9 im Prozesstank 1 angeordnet.

Es ist aber auch möglich, z.B. auf die weiter oben beschriebene Weise mehrere der Membran-Filtrationsanordnungen 9 im Prozesstank 1 anzuordnen. Die gewählte Anordnung stellt sicher, dass im Bereich der Filtrationsanordnungen ein relativ konstanter Transmembrandruck an den verschiedenen Stellen der Filterscheiben herrscht. Der notwendige Transmembrandruck wird durch Druckbeaufschlagung mit einem Gas, durch eine Flüssigkeitssäule (V13 in Fig. 1) erzeugt werden.

Ein derartiges Ausführungsbeispiel ist in Figur 2 dargestellt, wo je Prozesstank 1 zwei der Membran-Filtrationsanordnungen 9 dargestellt sind.

Es ist zudem auch denkbar, dass jede der Membran-Filtrationsanordnungen 9 mehr als zwei der Hohlwellen 11 aufweist, die miteinander überlappenden Membranfilterscheiben 14 versehen sind.

Nach Figur 2 sind die Membran-Filtrationsanordnungen 9 jeweils im unteren Bereich der vorzugsweise zylindrisch ausgebildeten, vertikal ausgerichteten Prozesstanks angeordnet.

In einer bevorzugten Ausführung weist der Prozesstank 1 eine Höhe von mehreren Metern auf. Vorzugsweise ist er so groß, dass er mindestens drei Meter hoch oberhalb der Filtrationsanordnung(en) 9 mit der Fermentationsbrühe befüllbar ist. Sein Durchmesser liegt vorzugsweise bei mehr als 1 m, insbesondere bei mehr als 1,5 m.

Die Darstellung der Figur 1 gibt insofern die bevorzugte horizontale und vertikale Ausrichtung der Filtrationsanordnung(en) in dem Prozesstank 1 wieder.

Die Funktion der Filtrationsanordnung 9 ist wie folgt:
Zu filtrierendes Medium strömt an den sich drehenden Membranfilterscheiben 14 vorbei, wobei das Filtrat in die Hohlkammern der als Doppelscheiben z.B. nach Art der US 6,461,503 B1 ausgebildeten Membranfilterscheiben 14 eintritt und durch die Hohlwellen 11 und die diesen nachgeschaltete Ableitung 12 aus dem Tank geleitet wird.

Durch bei der Filtration zurückgehaltene Partikel würde sich an sich eine Schicht auf den Membranfilterscheiben 14 bilden, die aber aufgrund des zumindest teilweise radialen Überlappens der Membranfilterscheiben 14 und der Drehung der Membranfilterscheiben 14 durch die entstehenden Strömungsverhältnisse und Turbulenzen jedenfalls teilweise wieder von den Membranfilterscheiben 14 gelöst wird, so dass die Filtrationswirkung über einen langen Zeitraum erhalten bleibt.

Anders als nach der US 6,361,503 ist allerdings kein Retentatabfluß vorgesehen sondern es erfolgt eine Filtration des zu filtrierenden Medium mit einer sofortigen Ableitung des Permeats, wohingegen das Retentat während der weiteren Filtration in dem Prozesstank 1 verbleibt. Das Retentat wird vielmehr erst nach dem Beenden der Filtration aus dem Prozesstank 1 abgelassen. Da das Retentat während der Filtration im Prozesstank verbleibt, ergibt sich eine Aufkonzentration der Feststoffanteile im Prozesstank. Optional kann während der Filtration weitere Flüssigkeit zugesetzt werden.

Produktbelastende Pumpvorgänge zu einem separat angeordneten Filter, bei denen die Gefahr von Zellbeschädigungen besteht, müssen nicht durchgeführt werden.
Um im Verfahren auch vorgeschaltete Pumpvorgänge zu vermeiden, empfiehlt sich die Anordnung des oder der vorgeschalteten Reaktionstanks oberhalb der Prozesstanks 1, so dass der Zulauf in die Prozesstanks 1 direkt aufgrund des Gefälles erfolgen kann.

Aus dem oben genannten Grund ist an sich kein echter kontinuierlicher Betrieb der pumpenfreien Filtrationsvorrichtung sondern nur ein Batchbetrieb möglich. Um dennoch eine industriell nutzbare kontinuierliche Anlage zu schaffen, ist es daher vorteilhaft, mehrere der Filtrationsvorrichtungen nach Fig. 1 zu einer übergeordneten Filtrationsanlage zu verschalten und dann die Filtration in den Prozesstanks 1 versetzt zueinander durchzuführen. Nachfolgend wird eine Variante eines derartigen Versatzes beschrieben. Es sind aber alternative Versatzschemen denkbar.

Vorzugsweise besteht eine Filtrationsanlage aus mehreren der in Figur 1 dargestellten Filtrationsvorrichtungen. Eine derartige Ausgestaltung hat sich besonders bewährt, da sie einen quasikontinuierlichen Betrieb ermöglicht, was insbesondere bei industriellen Prozessen von Vorteil ist.

Bei dem in Figur 2 dargestellten besonders bevorzugten Ausführungsbeispiel sind drei der Filtrationsvorrichtungen mit je einem Prozesstarik 1 und zwei der im Prozesstank angeordneten Membran-Filtrationsanordnungen zu einer übergeordneten Filtrationsanlage zusammengeschaltet, wobei sie an eine gemeinsame Zulauf- und eine gemeinsame Ablaufleitung angeschlossen sind, die jeweils absperrbare Abzweige zu den einzelnen Prozesstanks aufweisen.

Figur 2 zeigt die Filtrationsanlage, die drei der Filtrationsvorrichtungen aufweist, die der Einfachheit halber mit FV1, FV2 und FV3 bezeichnet werden, und die jeweils einen der Prozesstanks 1 mit wenigstens einer Filtrationsanordnung 9 aufweisen.

Details wie die Rühreinrichtung 6, die Gaszuleitung 4 sowie einige andere Einzelheiten sind in Figur 2 nicht dargestellt, da diese Figur wie die weiteren Figuren in erster Linie dazu dient, das erfindungsgemäße Verfahren zu veranschaulichen.

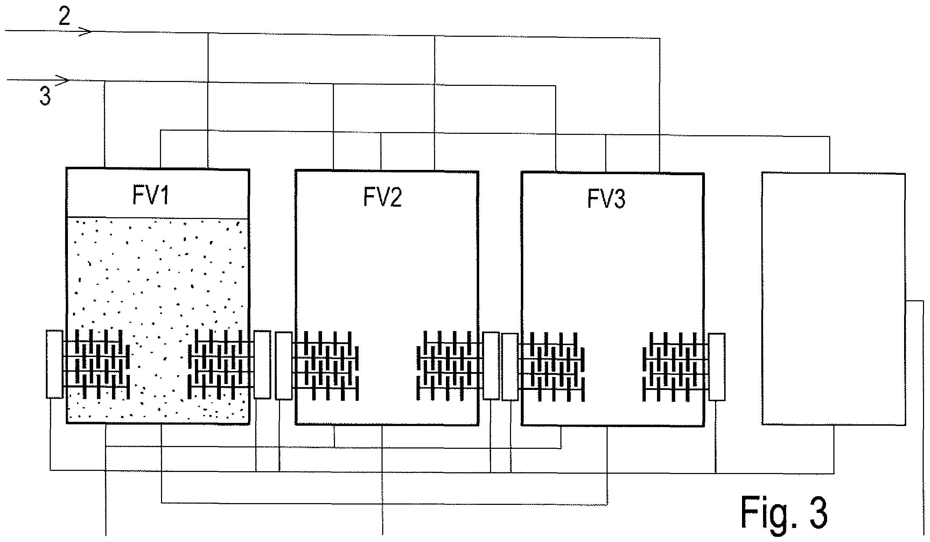

Bei dem erfindungsgemäßen Verfahren wird zunächst der Prozesstank 1 der Filtrationsvorrichtung mit der Bezeichnung FV1 durch die Zuleitung 2 mit einer Fermentationsbrühe befüllt (siehe Figur 3).

Nach einem bevorzugten Beispiel wird der Prozesstank 1 der Filtrationsvorrichtung FV1, der beispielhaft einen Durchmesser von 2 m aufweist und eine Höhe von ca. 5 m, bis zu einer Höhe von mindestens 3 m oberhalb des oberen Randes der Membran-Filtrationsanordnungen 9 befüllt, um einen konstanten Transmembrandruck TMP von z.B. ungefähr 0,3 bar im Bereich der Filtrationsanordnungen 9 bzw. der Membranfilterscheiben 14 durch die beim Befüllen im Prozesstank 1 entstehende Flüssigkeitssäule zu realisieren. Der sinkende Pegel im Zuge der Aufkonzentrierung führt zu einem veränderten hydrostatischen Druck, was insbesondere über Beaufschlagung mit Gasdruck ausgeglichen werden kann. Die Zulaufgeschwindigkeit beträgt beispielweise zunächst ca. 4,5 bis 5 m³/h für eine Fermentationsbrühe aus Hefekulturen.

Der prozentuale Biomasseanteil V(Biomasse)/V(Fermentationsbrühe), nachfolgend kurz: % V/V genannt; liegt zu Beginn beispielsweise zwischen 1 und 45 % beträgt.

Nach dem Befüllen des Prozesstanks 1 der Vorrichtung FV1 werden die Membran-Filtrationsanordnungen 9 in Betrieb genommen. Dabei wird die Fermentationsbrühe mit Rühreinrichtung 6 durchmischt. Es ist denkbar, zum Antrieb der Rühreinrichtung den Antrieb der Filtrationsanordnung 9 zu verwenden. In diesem Fall wären die Rührmittel in Verlängerung von Hohlwellen 11 angeordnet.

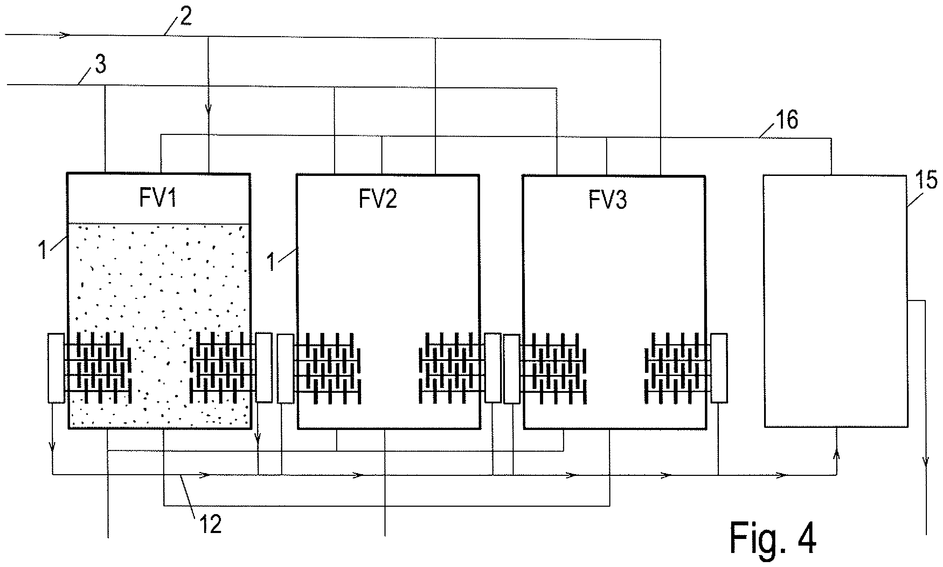

Die durch die Filtration von den Membranscheiben 14 zurückgehaltenen Stoffe, das Retentat, verbleiben zunächst im Tank. Das Permeat fließt dagegen durch die Ableitung 12 ab. Es bildet den zu gewinnenden und ggf. weiterzuverarbeitenden Wertstoff des Prozesses (Fig. 4).

Durch das fortgesetzte Betreiben der Filtrationsanlage, vorzugsweise unter einem ständigen Ersatz des ablaufenden Flüssigkeitsvolumens, aus dem Prozesstank durch nachlaufende Fermentationsbrühe wird - siehe Figur 4 - der Biomasseanteil in der Fermentationsbrühe erhöht. Diese Filtration wird fortgesetzt, bis ein aufkonzentrierter Biomasse-Volumenanteil von beispielsweise 40 - 90 % V/V, vorzugsweise 60 - 70 % V/V in der Fermentationsbrühe erreicht ist. Das Zusetzen von weiterer Fermentationsbrühe bei der Aufkonzentration ist nicht zwingend erforderlich.

Das Permeat wird durch die Ableitungen 12 abgeleitet. Die Ableitungen 12 münden gemeinsam in einen Zwischentank 15, der als optionaler Zwischentank dient, der eine Weiterverarbeitungsstufe, z.B. einer weiteren Filtrationsstufe (optional) vorgeschaltet sein kann.

Aus der weiteren Filtrationsstufe kann Prozesswasser in einem Zwischentank zwischengespeichert werden. Es ist denkbar, das zwischengespeicherte Wasser jedenfalls zum Teil über eine Zuleitung 16 in die Tanks 1 mit zurückzuleiten, so bei einem folgenden waschungsartigen Diafiltrationsschritt, der nachfolgend erörtert wird.

Das Aufkonzentrieren der Fermentationsflüssigkeit wird bis zu einem vorgegebenen Grenzwert an Biomasse-Konzentration fortgeführt, der z.B. bei mehr als 50% V/V Biomasseanteil liegt.

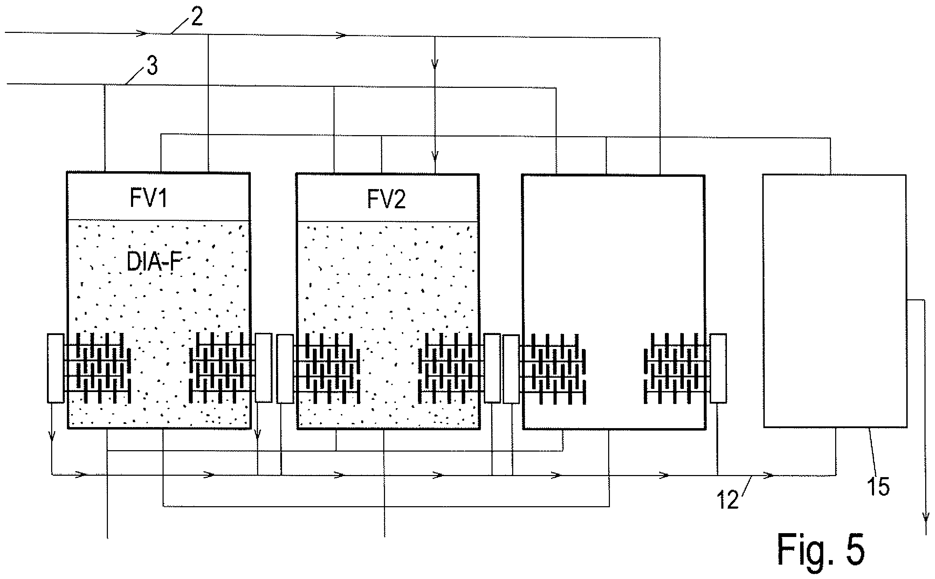

Sobald dieser Wert erreicht wird, startet - siehe Figur 5 - in der Filtrationsvorrichtung FV1 eine weitere Filtrationsstufe, die als waschungsartige Diafiltration durchgeführt wird.

Bei dieser Diafiltration wird keine weitere Fermentationsbrühe 1 in den Prozesstank 1 nachgefüllt sondern ablaufendes Permeat wird jedenfalls teilweise durch eine andere Flüssigkeit, vorzugsweise durch ggf. geeignet aufbereitetes Prozesswasser oder Puffer aus dem Permeat (Aufbereitungsstufe hier nicht dargestellt) ersetzt. Dabei wird vorzugsweise weiter ein konstanter, vorzugebender Transmembrandruck an den Filtrationsscheiben 14 von z.B. 0, 3 bar aufrecht erhalten. Auch bei der Diafiltration wird zunächst das Retentat nicht abgeleitet sondern erst nach einem genügenden Waschvorgang unter Austausch der Flüssigkeit durch nachfließende Flüssigkeit.

Der Transmembrandruck an den Membranfilterscheiben 14 wird vorzugsweise während der beiden vorstehend erläuterten Filtrationsstufen auf mehr als 0,1 bar, besonders bevorzugt auf mehr als 0, 2 bar und ganz besonders bevorzugt zwischen 0, 2 und 0, 3 bar konstant gehalten. Der bevorzugte Prozesstankradius liegt bei mehr als 2 m, vorzugsweise bei mehr als 3 m.

Gleichzeitig zur Diafiltration im Prozesstank 1 der Filtrationsvorrichtung FV1 wird entsprechend zu Figur 3 in Fig. 5 durch die Zuleitung 3 das Befüllen des Prozesstanks 1 der zweiten Filtrationsvorrichtung mit der Bezeichnung FV2 gestartet.

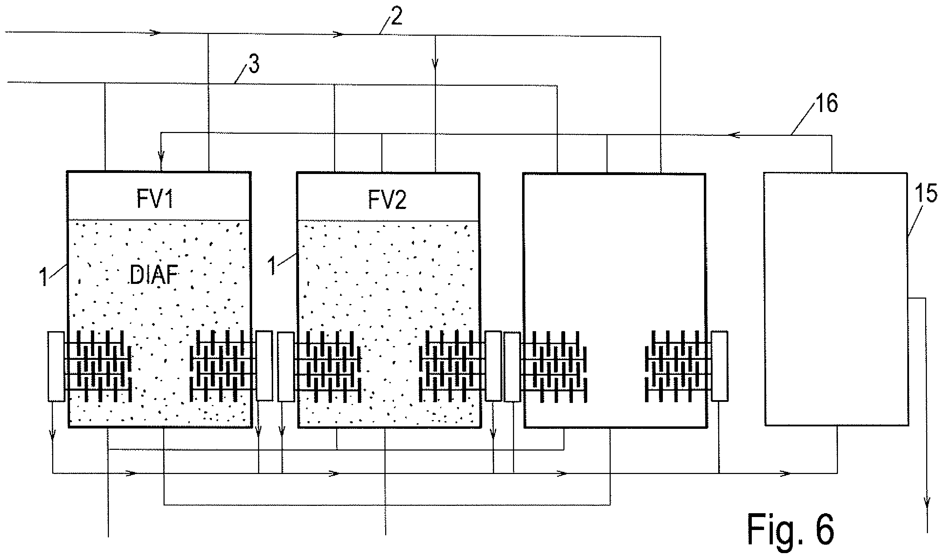

Wie in Figur 6 veranschaulicht, wird nach dem Befüllen des Prozesstanks 1 der Filtrationsvorrichtung FV2 dort das Filtrieren und das Aufkonzentrieren der Fermentationsbrühe unter gleichzeitigem Nachbefüllen des Prozesstanks 1 mit Fermentationsbrühe gestartet. Die Diafiltration in der Filtrationsvorrichtung FV1 wird fortgesetzt.

Bei allen Filtrationsschritten wird vorzugsweise in der Flüssigkeit im Prozesstank 1 eine Bewegung durch Mischen erzeugt.

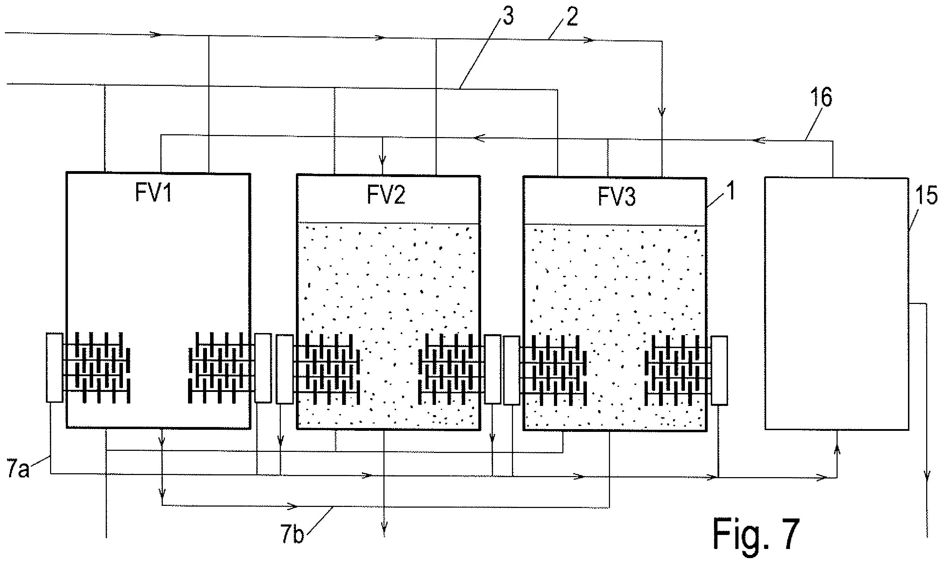

Wie aus Figur 7 ersichtlich, wird die Diafiltration in der Filtrationsvorrichtung FV1 schließlich nach Beenden der Diafiltration z.B. nach Erreichen bestimmter Grenzwerte gestoppt.

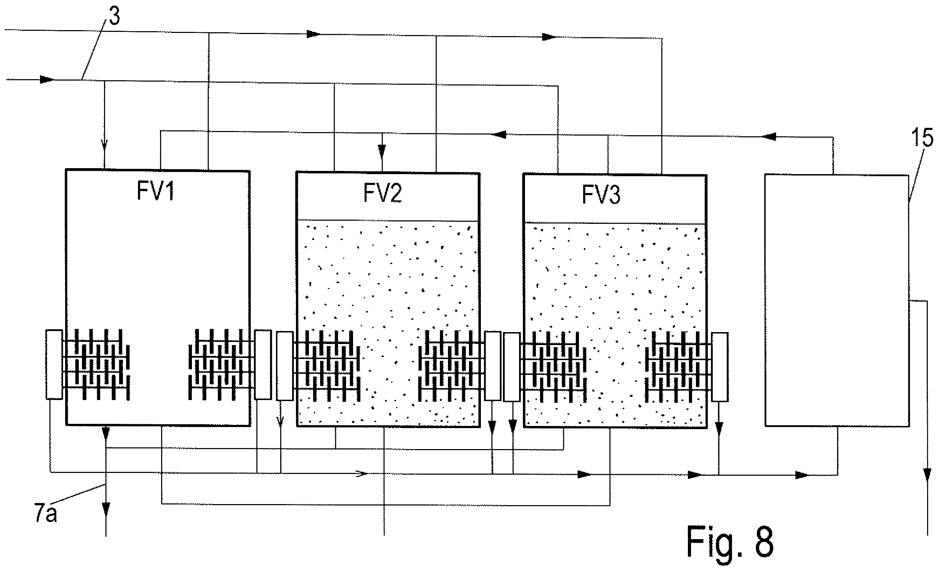

Sodann wird die Filtrationsvorrichtung FV1 entleert, wobei zunächst ein Entleeren von aufkonzentrierter Biomasse (Fig. 7: 7b) und dann ein Entleeren nach einem Reinigen des Prozesstanks und der Filtrationsanordnungen (CIP-Reinigung) (Fig. 8: 7a) erfolgen kann, was schematisch durch zwei verschiedene Abläufe 7a und 7b dargestellt ist. Die Biomasse wird ggf. einer weiteren Verwendung zugeführt.

In der Filtrationsvorrichtung FV2 wird nach diesem Beispiel gleichzeitig die Diafiltration gestartet. Ferner wird das Befüllen des Prozesstanks 1 der Filtrationsvorrichtung FV3 gestartet. Wie aus Figur 8 ersichtlich, startet in der Filtrationsvorrichtung FV1 sodann eine CIP-Reinigung (cleaning in place), wohingegen in der Filtrationsvorrichtung FV2 die Diafiltration fortgesetzt und in der Filtrationsvorrichtung FV3 die Filtrationsstufe der Aufkonzentration, vorzugsweise unter gleichzeitiger Nachführung von Fermentationsbrühe gestartet wird.

Die anhand der Fig. 1 bis 8 durchlaufenden Schritte werden nunmehr versetzt reihum in den drei Filtrationsvorrichtungen durchgeführt, um derart einen quasikontinuierlichen Betrieb zu ermöglichen.

Entsprechend werden reihum versetzt zueinander die Filtrationsvorrichtungen FV1, FV2 und FV3 mit folgenden Verfahrensschritten betrieben:
a) zunächst wird jeweils der Prozesstank 1 befüllt, bis der Transmembrandruck TMP in einem vorgegebenen Bereich liegt;
b) sodann erfolgt ein Filtrieren der Fermentationsbrühe in den Prozesstank 1 mit den Membranfiltrationsanordnungen 9, beispielweise unter gleichzeitigem Nachbefüllen des als Permeat ablaufenden Flüssigkeitsvolumens durch nachlaufende Fermentationsbrühe, bis ein vorgegebener Biomasseanteil % V/ V erreicht wird,
c) sodann erfolgt eine waschungsartige Diafiltration, bei der der Nachlauf an Fermentationsbrühe gestoppt und ablaufende Flüssigkeit durch Wasser, insbesondere aus dem Permeat mittels einer weiteren Aufbereitung, z.B. durch eine weitere Filtration, getrenntes Waschwasser, ersetzt wird,
d) sodann erfolgt ein Ablassen des Retentats aus dem Prozesstank und ggf. eine Reinigung des Prozesstanks 1.

Vorzugsweise laufen diese Schritte in den mehreren Filtrationsvorrichtungen versetzt zueinander ab.

Die Fig. 2 bis 8 beschreiben eine bevorzugte Fitrationsanlage, auf welche die Erfindung aber nicht beschränkt ist.

So wäre es auch denkbar, mehr als drei der Filtrationsvorrichtungen parallel zu betreiben und dabei die Prozessschritte a) bis d) ggf. in der beschrieben oder ggf. leicht anderem Versatz versetzt zueinander ablaufen zu lassen.

Mit nur drei Prozesstank 1 und damit drei Filtrationsvorrichtungen ist aber bereits ein quasi kontinuierlicher Betrieb realisierbar.

Besonders vorteilhaft sind der geringe apparativer Aufwand (wenig Pumpen und Behälter), die schonende Verarbeitung, der niedrige, konstant gehaltene Druck an den Membranfilterscheiben und eine niedrige Strömungsgeschwindigkeit in den drei Prozesstank 1 der Filtrationsvorrichtungen FV1, FV2 und FV 3.

### Bezugszeichen

| | |
|---|---|
| Tank | 1 |
| Zuleitung | 2, 3 |
| Zuleitung | 4 |
| Gasflasche | 5 |
| Rühreinrichtung | 6 |
| Ablauf | 7 |
| Ablaufventil | 8 |
| Filtrationsanordnung | 9 |
| Flanschplatte | 10 |
| Welle | 11 |
| Ableitung | 12 |
| Ventil | 13 |
| Membranfilterscheibe | 14, 14a |
| Zwischentank | 15 |
| Zuleitung | 16 |

## Patentansprüche

1. Filtrationsverfahren mit einer Filtrationsvorrichtung mit einem Prozesstank (1), in den wenigstens eine Zuführung (2) zur Zuleitung eines zu verarbeitenden Mediums in Form einer zu filtrierenden Fermentationsbrühe, mündet, wobei in dem Prozesstank (1) wenigstens eine Filtrationsanordnung (9) angeordnet ist und wobei der Prozesstank (1) wenigstens einen Ablauf aufweist und derart ausgelegt ist, dass die Filtration des zu filtrierenden Mediums unter Verbleib des Retentats im Prozesstank (1) bis zu einem Ablassen des Retentats nach dem Beenden der Filtration durchführbar ist, mit folgenden Verfahrensschritten:
a) der Prozesstank (1) wird mit dem zu filtrierenden Medium befüllt und an der wenigstens einen Membran-Filtrationsanordnung (9) wird ein vorgegebener Transmembrandruck (TMP), erzeugt;
b) das Medium als Fermentationsbrühe, in dem Prozesstank (1) wird mit den Membran-Filtrationsanordnungen (9) filtriert, bis ein vorgegebener Grenzwert des Masseanteils an Feststoff, insbesondere des Biomasseanteils, erreicht wird
**dadurch gekennzeichnet, dass**
c) das Medium als Fermentationsbrühe, in dem Prozesstank (1) im Schritt b) mit den Filtrationsanordnungen (9), unter gleichzeitigem Nachbefüllen des als Permeat ablaufenden Flüssigkeitsvolumens durch nachlaufendes Medium, filtriert wird, bis ein vorgegebener Grenzwert des Masseanteils an Feststoff, insbesondere des Biomasseanteils, erreicht wird, wobei
d) der Transmembrandruck während der Filtration konstant gehalten wird und
e) das Medium als Fermentationsbrühe, in dem Prozesstank (1) aus Schritt b) mittels einer waschungsartigen Diafiltration weiter filtriert wird, wobei der bisher erfolgte Nachlauf an Fermentationsbrühe gestoppt und ablaufendes Permeat durch einen Waschflüssigkeitszusatz in den Tank ersetzt wird,
f) sodann ein Ablassen der Restflüssigkeit aus dem Prozesstank und
g) eine Reinigung des Prozesstanks (1) erfolgt
wobei der oder die Filtrationsschritte mit wenigstens einer oder mehrerer folgender Filtrationsanordnungen erfolgen: die Filtrationsanordnung weist wenigstens eine, zwei oder mehr Hohlwellen (11) auf, auf der oder denen jeweils eine Mehrzahl von Membranfilterscheiben (14) angeordnet ist bzw. sind, wobei der wenigstens einen oder den mehreren Hohlwellen (11) wenigstens ein Antrieb zugeordnet ist und wobei die Ableitung von Permeat aus dem Prozesstank (1) durch die Hohlwellen (11) erfolgt und
wobei der Transmembrandruck an den Membranfilterscheiben durch Druckbeaufschlagung mit einem Gas und durch eine Flüssigkeitssäule über den Membranfilterscheiben erzeugt wird,
wobei ein sinkender Pegel im Zuge einer Aufkonzentrierung und ein damit einhergehender veränderter hydrostatischer Druck durch über Beaufschlagung mit Gasdruck ausgeglichen wird.

2. Filtrationsverfahren nach Anspruch 1, **dadurch gekennzeichnet, dass** während der Filtration des Schrittes b) und/oder während der Diafiltration des Schrittes e) eine Strömung im Prozesstank aufrecht erhalten wird.

3. Filtrationsverfahren nach Anspruch 2, **dadurch gekennzeichnet, dass** die im Schritt e) zum Ersatz dienende Flüssigkeit Wasser ist, das aus dem Permeat durch eine weitere Behandlung zurückgewonnen wird.

4. Filtrationsverfahren nach einem der vorstehenden Ansprüche, **dadurch gekennzeichnet, dass** die Flüssigkeit im Prozesstank die Filtrationsanordnung zumindest bedeckt.

5. Filtrationsverfahren nach einem der vorstehenden Ansprüche, **dadurch gekennzeichnet, dass** während der Filtration, insbesondere der Diafiltration des Schritts e) ein konstanter Transmembrandruck an den Filtrationsscheiben (14) von mehr als 0,2 bar aufrecht erhalten wird.

6. Filtrationsverfahren nach Anspruch 5, **dadurch gekennzeichnet, dass** während der Filtration, insbesondere der Diafiltration des Schritts e) ein konstanter Transmembrandruck an den Filtrationsscheiben (14) von weniger als 1 bar aufrecht erhalten wird.

7. Filtrationsverfahren nach einem der vorstehenden Ansprüche, zur Durchführung einer Filtration eines zu filtrierenden Mediums als Fermentationsbrühe, mit einer Filtrationsanlage mit mehrere Filtrationsvorrichtungen, **dadurch gekennzeichnet, dass** Verfahrensschritte aus den vorstehenden Ansprüchen versetzt zueinander in den mehreren Filtrationsvorrichtungen durchlaufen werden.

8. Filtrationsvorrichtung zur Durchführung des Verfahrens nach einem der vorstehenden Ansprüche, mit einem Prozesstank (1), in den wenigstens eine Zuleitung (2) zur Zuleitung eines zu verarbeitenden Mediums als zu filtrierende Fermentationsbrühe, mündet, wobei in dem Prozesstank (1) wenigstens eine Membran-Filtrationsanordnung (9) angeordnet ist, die wenigstens eine, zwei oder mehr Hohlwellen (11) aufweist, auf der oder denen eine Mehrzahl von Membranfilterscheiben (14) angeordnet ist bzw. sind, wobei der wenigstens einen oder den mehreren Hohlwellen (11) wenigstens ein Antrieb zugeordnet ist und wobei die Ableitung von Permeat aus dem Prozesstank (1) durch die Hohlwellen (11) erfolgt, und wobei der Prozesstank (1) wenigstens einen Ablauf aufweist, wobei der Prozesstank (1) derart ausgelegt ist, dass die Filtration des zu filtrierenden Mediums unter Verbleib des Retentats im Prozesstank (1) bis zu einem Ablassen des Retentats nach dem Beenden der Filtration durchführbar ist, wobei die Filtrationsanordnung (9) derart in dem Prozesstank angeordnet ist und dass die Filtrationsanordnungen am Außenumfang des Prozesstanks angeordnet sind, so dass die Hohlwellen (11) mit den Membranfilterscheiben vom Außenumfang her in den Prozesstank (1) einragen,
wobei die Filtrationsvorrichtung derart ausgebildet ist, dass der Transmembrandruck an den Membranfilterscheiben durch Druckbeaufschlagung mit einem Gas und durch eine Flüssigkeitssäule über den Membranfilterscheiben erzeugt wird,
wobei der Prozesstank eine Zuleitung (4), zur Beaufschlagung des Prozesstanks mit einem Gas, insbesondere Inertgas oder Luft, aufweist, wobei in die Zuleitung ein Ventil (5) geschaltet ist.

9. Filtrationsvorrichtung nach Anspruch 8, **dadurch gekennzeichnet, dass** die Filtrationsanordnung (9) derart in dem Prozesstank angeordnet ist und dass der Tank derart ausgelegt und mit dem zu filternden Medium befüllbar ist, dass durch das Medium eine Flüssigkeitssäule erzeugt wird, die einen Transmembrandruck von mehr als 0,2 bar und weniger als 1 bar an den MembranFilterscheiben (14) erzeugt.

10. Filtrationsvorrichtung nach Anspruch 8 oder 9, **dadurch gekennzeichnet, dass** der Prozesstank (1) einen verschließbaren Ablauf (8) für das Retentat aufweist.

11. Filtrationsvorrichtung nach einem der vorhergehenden Ansprüche, **dadurch gekennzeichnet, dass** jede Filtrationsanordnung mehrere der Hohlwellen (11) aufweist und dass die Membranfilterscheiben (14) derart auf den Hohlwellen (11) angeordnet sind, dass sie sich zumindest radial abschnittsweise überlappen.

12. Filtrationsvorrichtung nach einem der vorstehenden Ansprüche 8 bis 11,
**dadurch gekennzeichnet, dass** in dem Prozesstank (1) eine Rühreinrichtung (6) angeordnet ist.

13. Filtrationsvorrichtung nach einem der vorstehenden Ansprüche 8 bis 12,
**dadurch gekennzeichnet, dass** die Hohlwellen (11) horizontal ausgerichtet sind.

14. Filtrationsvorrichtung nach einem der vorstehenden Ansprüche 8 bis 13,
**dadurch gekennzeichnet, dass** jede der Filtrationsanordnungen durch eine Öffnung des Prozesstanks in diesen einbringbar ist und dass jede der Öffnungen des Prozesstanks mit einer Flanschplatte (10), an welcher die Filtrationsanordnung befestigt ist, verschließbar ist.

15. Filtrationsanlage, **gekennzeichnet durch** zwei oder mehr zusammen geschaltete Filtrationsvorrichtungen nach einem der vorstehenden Ansprüche.

16. Filtrationsanlage nach Anspruch 15, **gekennzeichnet durch** drei Filtrationsvorrichtungen nach einem der vorstehenden Ansprüche 8 - 15.

17. Verwendung einer Filtrationsvorrichtung oder Filtrationsanlage nach einem der vorstehenden Ansprüche 8 bis 15 zur Filtration einer Fermentationsbrühe.

## Claims

1. A filtration method involving a filtration device having a process tank (1), into which at least one feed (2) for supplying a medium to be processed, in the form of a fermentation broth to be filtered, empties, wherein at least one filtration arrangement (9) is arranged in the process tank (1) and wherein the process tank (1) has at least one drain and is designed in such a way that the filtration of the medium to be filtered can be carried out with the retentate remaining in the process tank (1) until the retentate is released after completion of filtration, having the following method steps:
a) the process tank (1) is filled with the medium to be filtered and a pre-defined transmembrane pressure (TMP) is produced at the at least one membrane filtration arrangement (9);
b) the medium in the form of fermentation broth in the process tank (1) is filtered by means of the membrane filtration arrangements (9) until a pre-defined limit value for the mass fraction of solid material, in particular the biomass fraction, is reached,
**characterized in that**
c) the medium in the form of fermentation broth in the process tank (1) is filtered in step b) by means of the filtration arrangements (9) while simultaneously replenishing the volume of liquid flowing off as permeate by additional medium flowing in until a pre-defined limit value for the mass fraction of solid material, in particular the biomass fraction, is reached, wherein
d) the transmembrane pressure during filtration is held constant and
e) the medium in the form of fermentation broth in the process tank (1) from step b) is subjected to further filtering by means of a wash-type diafiltration, with the replenishing flow of fermentation broth that has occurred up to this point being stopped and outflowing permeate being replaced by an addition of washing liquid to the tank,
f) the residual liquid is then released from the process tank, and
g) the process tank (1) is cleaned,
wherein the filtration step or steps is or are performed with at least one or more of the following filtration arrangements: the filtration arrangement has at least one, two or more hollow shafts (11), on each of which a plurality of membrane filter disks (14) is arranged, the at least one or
more hollow shafts (11) being assigned at least one drive, and permeate being discharged from the process tank (1) through the hollow shafts (11), and
wherein the transmembrane pressure at the membrane filter disks is produced by pressurization with a gas and by a liquid column above the membrane filter disks,
wherein a falling level in the course of concentration and a corresponding change in the hydrostatic pressure are compensated by the application of gas pressure.

2. The filtration method as claimed in claim 1, **characterized in that** a flow is maintained in the process tank during the filtration in step b) and/or during the diafiltration in step e).

3. The filtration method as claimed in claim 2, **characterized in that** the liquid used for replacement in step e) is water that is recovered from the permeate by a further treatment operation.

4. The filtration method as claimed in one of the preceding claims, **characterized in that** the liquid in the process tank at least covers the filtration arrangement.

5. The filtration method as claimed in one of the preceding claims, **characterized in that** a constant transmembrane pressure at the filtration disks (14) of more than 0.2 bar is maintained during the filtration, in particular the diafiltration, in step e).

6. The filtration method as claimed in claim 5, **characterized in that** a constant transmembrane pressure at the filtration disks (14) of less than 1 bar is maintained during the filtration, in particular the diafiltration, in step e).

7. The filtration method as claimed in the preceding claims, for carrying out a filtration of a medium to be filtered, in the form of a fermentation broth, with a filtration system having a plurality of filtration devices, **characterized in that** method steps from the above claims are carried out with an offset relative to one another in the various filtration devices.

8. A filtration device for carrying out the method as claimed in one of the preceding claims, having a process tank (1), into which at least one feed line (2) for supplying a medium to be processed, in the form of a fermentation broth to be filtered, empties, wherein at least one membrane filtration arrangement (9) is arranged in the process tank (1), said arrangement having at least one, two or more hollow shafts (11), on which a plurality of membrane filter disks (14) is arranged, wherein the at least one or more hollow shafts (11) are assigned at least one drive, and wherein permeate is discharged from the process tank (1) through the hollow shafts (11), and wherein the process tank (1) has at least one drain, wherein the process tank (1) is designed in such a way that the filtration of the medium to be filtered can be carried out with the retentate remaining in the process tank (1) until the retentate is released after completion of filtration, wherein the filtration arrangement (9) is arranged in the process tank in such a way and in that the filtration arrangements are arranged at the outer circumference of the process tank, so that the hollow shafts (11) with the membrane filter disks project into the process tank (1) from the outer circumference,
wherein the filtration arrangement is arranged in such a way that the transmembrane pressure at the membrane filter disks is produced by pressurization with a gas and by a liquid column above the membrane filter disks, wherein the process tank has a feed line (4) for supplying the process tank with a gas, especially an inert gas or air, wherein a valve (5) is inserted into the feed line.

9. The filtration device as claimed in claim 8, **characterized in that** the filtration arrangement (9) is arranged in the process tank in such a way and **in that** the tank is designed and can be filled with the medium to be filtered in such a way that the medium forms a liquid column which produces a transmembrane pressure of more than 0.2 bar and less than 1 bar at the membrane filter disks (14).

10. The filtration device as claimed in claim 8 or 9, **characterized in that** the process tank (1) has a closable drain (8) for the retentate.

11. The filtration device as claimed in one of the preceding claims, **characterized in that** each filtration arrangement has a plurality of hollow shafts (11), and **in that** the membrane filter disks (14) are arranged on the hollow shafts (11) in such a way that they overlap at least radially in sections.

12. The filtration device as claimed in one of preceding claims 8 to 11, **characterized in that** an agitating device (6) is arranged in the process tank (1).

13. The filtration device as claimed in one of preceding claims 8 to 12, **characterized in that** the hollow shafts (11) are aligned horizontally.

14. The filtration device as claimed in one of preceding claims 8 to 13, **characterized in that** each of the filtration arrangements can be introduced into the process tank through an opening in the latter and **in that** each of the openings in the process tank can be closed by means of a flange plate (10), on which the filtration arrangement is secured.

15. A filtration system **characterized by** two or more filtration devices as claimed in one of the preceding claims, which are connected together.

16. The filtration system as claimed in claim 15 **characterized by** three filtration devices as claimed in one of the preceding claims 8 to 15.

17. The use of a filtration device or filtration system as claimed in one of preceding claims 8 to 15 for the purpose of filtering a fermentation broth.

## Revendications

1. Procédé de filtration avec un dispositif de filtration comprenant une cuve de process (1) dans laquelle débouche au moins une conduite d'arrivée (2) qui amène une matière à traiter se présentant comme un bouillon de fermentation à filtrer, au moins un dispositif de filtration (9) étant disposé dans la cuve de process (1) et la cuve de process (1) présentant au moins un écoulement et étant conçue de telle façon que la filtration de la matière à filtrer puisse être effectuée en laissant le rétentat dans la cuve de process (1) jusqu'à ce qu'il soit évacué après la fin de la filtration, comportant les étapes de procédé suivantes :
a) remplissage de la cuve de process (1) avec la matière à filtrer et génération d'une pression transmembranaire (PTM) prédéterminée au niveau du dispositif de filtration à membrane (9) ;
b) filtration de la matière se présentant comme un bouillon de fermentation dans la cuve de process (1) avec les dispositifs de filtration à membrane (9) jusqu'à ce qu'une valeur limite de proportion de solides dans la masse, en particulier de proportion de biomasse, soit atteinte,
**caractérisé en ce que**
c) la matière se présentant comme un bouillon de fermentation filtrée dans la cuve de process (1) dans l'étape b) est filtrée avec les dispositifs de filtration (9) en complétant en même temps le volume de liquide qui s'écoule sous forme de perméat avec un complément de matière, jusqu'à ce qu'une valeur limite de proportion de solides dans la masse, en particulier de proportion de biomasse, soit atteinte,
d) la pression transmembranaire étant maintenue constante pendant la filtration et
e) la matière se présentant comme un bouillon de fermentation dans la cuve de process (1) résultant de l'étape b) est encore filtrée par une diafiltration comparable à un lavage en arrêtant l'ajout de bouillon de fermentation et en remplaçant le perméat qui s'écoule par un ajout de liquide de lavage dans la cuve,
f) le liquide restant est ensuite évacué de la cuve de process et
g) la cuve de process (1) est nettoyée,
la ou les étapes de filtration étant effectuées avec au moins un ou plusieurs des dispositifs de filtration suivants : le dispositif de filtration présente au moins un, deux ou plusieurs arbres creux (11) sur lequel ou chacun desquels sont disposés plusieurs disques de filtre à membrane (14), l'au moins un ou les plusieurs arbres creux (11) étant associés à au moins un entraînement et l'évacuation de perméat hors de la cuve de process (1) passant à travers les arbres creux (11) et
la pression transmembranaire au niveau des disques de filtre à membrane étant générée par application de pression avec un gaz ou par une colonne de liquide sur les disques de filtre à membrane,
une baisse du niveau au cours de la concentration et un changement de la pression hydrostatique associé étant compensées par l'application d'une pression de gaz.

2. Procédé de filtration selon la revendication 1, **caractérisé en ce qu'**un écoulement est maintenu dans la cuve de process pendant la filtration de l'étape b) et/ou pendant la diafiltration de l'étape e).

3. Procédé de filtration selon la revendication 2, **caractérisé en ce que** le liquide de substitution dans l'étape e) est de l'eau récupérée dans le perméat par un autre traitement.

4. Procédé de filtration selon l'une des revendications précédentes, **caractérisé en ce que** le liquide dans la cuve de process couvre, au minimum, le dispositif de filtration.

5. Procédé de filtration selon l'une des revendications précédentes, **caractérisé en ce qu'**une pression transmembranaire constante de plus de 0,2 bar est maintenue au niveau des disques de filtration (14) pendant la filtration, en particulier la diafiltration de l'étape e).

6. Procédé de filtration selon la revendication 5, **caractérisé en ce que** qu'une pression transmembranaire constante de moins de 1 bar est maintenue au niveau des disques de filtration (14) pendant la filtration, en particulier la diafiltration de l'étape e).

7. Procédé de filtration selon l'une des revendications précédentes pour la filtration d'une matière à filtrer se présentant comme un bouillon de fermentation, avec une installation de filtration comprenant plusieurs dispositifs de filtration, **caractérisé en ce que** des étapes du procédé selon les revendications précédentes sont exécutées de façon décalée les unes par rapport aux autres dans plusieurs dispositifs de filtration.

8. Dispositif de filtration pour la mise en oeuvre du procédé selon l'une des revendications précédentes, comprenant une cuve de process (1) dans laquelle débouche au moins une conduite d'arrivée (2) qui amène une matière à traiter se présentant comme un bouillon de fermentation à filtrer, au moins un dispositif de filtration (9) étant disposé dans la cuve de process (1) et présentant au moins un, deux ou plusieurs arbres creux (11) sur lequel ou lesquels sont disposés plusieurs disques de filtre à membrane (14), l'au moins un ou les plusieurs arbres creux (11) étant associés à au moins un entraînement et l'évacuation de perméat hors de la cuve de process (1) passant à travers les arbres creux (11), et la cuve de process (1) présentant au moins une évacuation, la cuve de process (1) étant conçue de telle manière que la filtration de la matière à filtrer puisse être effectuée en laissant le rétentat dans la cuve de process (1) jusqu'à ce qu'il soit évacué après la fin de la filtration, le dispositif de filtration (9) étant disposé dans la cuve de process et les dispositifs de filtration disposés sur la circonférence extérieure de la cuve de process de telle manière que les arbres creux (11) dépassent dans la cuve de process (1) à partir de la circonférence extérieure avec les disques de filtre à membrane,
dans lequel le dispositif de filtration est conçu de telle sorte qu'une pression transmembranaire au niveau des disques de filtre à membrane soit générée par application de pression avec un gaz et par une colonne de liquide sur les disques de filtre à membrane,
dans lequel la cuve de process présente une conduite d'arrivée (4) pour exposer la cuve de process à un gaz, en particulier un gaz inerte ou de l'air, une vanne (5) étant montée dans la conduite d'arrivée.

9. Dispositif de filtration selon la revendication 8, **caractérisé en ce que** le dispositif de filtration (9) est disposé dans la cuve de process de telle manière et la cuve est conçue et peut être remplie de matière à filtrer de telle manière que la matière forme une colonne de liquide qui crée une pression transmembranaire de plus de 0,2 bar et moins de 1 bar sur les disques de filtre à membrane (14).

10. Dispositif de filtration selon la revendication 8 ou 9, **caractérisé en ce que** la cuve de process (1) présente un écoulement (8) pouvant être fermé pour le rétentat.

11. Dispositif de filtration selon l'une des revendications précédentes, **caractérisé en ce que** chaque dispositif de filtration présente plusieurs des arbres creux (11) et **en ce que** les disques de filtre à membrane (14) sont disposés sur les arbres creux (11) de telle manière qu'ils se chevauchent au moins en partie dans le sens radial.

12. Dispositif de filtration selon l'une des revendications 8 à 11, **caractérisé en ce qu'**un dispositif agitateur (6) est disposé dans la cuve de process (1).

13. Dispositif de filtration selon l'une des revendications 8 à 12, **caractérisé en ce que** les arbres creux (11) sont orientés à l'horizontale.

14. Dispositif de filtration selon l'une des revendications 8 à 13, **caractérisé en ce que** chacun des dispositifs de filtration peut être introduit dans la cuve de process à travers une ouverture de celle-ci et **en ce que** chacune des ouvertures de la cuve de process peut être fermée par une plaque de bride (10) sur laquelle est fixé le dispositif de fixation.

15. Installation de filtration **caractérisée en ce qu'**elle comporte deux ou plusieurs dispositifs de filtration selon l'une des revendications précédentes montés ensemble.

16. Installation de filtration selon la revendication 15, **caractérisée en ce qu'**elle comporte trois dispositifs de filtration selon l'une des revendications 8 à 15.

17. Utilisation d'un dispositif de filtration ou d'une installation de filtration selon l'une des revendications 8 à 15 pour la filtration d'un bouillon de fermentation.
